# EUROPEAN PATENT APPLICATION

(11) **EP 4 510 681 A1**
(43) Date of publication of application: **19.02.2025**
(21) Application number: 24193263.1
(22) Date of filing: 07.08.2024
(51) Int. Cl.: H04W 24/02, H04W 4/029, H04W 24/10, H04W 64/00

(54) **APPARATUS, METHOD, AND COMPUTER PROGRAM**

(30) Priority: 15.08.2023 GB 202312440
(71) Applicant: Nokia Technologies Oy, 02610 Espoo (FI)
(72) Inventor: ALWAR, Ethiraj, 560093 Bangalore (IN); PANTELIDOU, Anna, 92160 Antony (FR)
(74) Representative: Nokia EPO representatives

(57) **Abstract**

The disclosure relates to an apparatus comprising at least one processor and at least one memory including computer code for one or more programs, the at least one memory and the computer code configured, with the at least one processor, to cause the apparatus at least to: receive (1300), from a network node, configuration information for collecting apparatus trajectory data; and use (1302) the configuration information for collecting apparatus trajectory data.

## Description

### Field of the disclosure

The present disclosure relates to an apparatus, a method, and a computer program for using configuration information for at least one of collecting or reporting apparatus trajectory data in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising at least one processor and at least one memory storing instructions that, when executed by the at least one processor, cause the apparatus at least to: receive, from a network node, configuration information for collecting apparatus trajectory data; and use the configuration information for collecting apparatus trajectory data.

The configuration information may comprise a granularity for collecting apparatus trajectory data.

The granularity for collecting apparatus trajectory data may comprise at least one of the following: a list of cells where apparatus trajectory data is to be collected; a list of beams where apparatus trajectory data is to be collected; or a list of locations where apparatus trajectory data is to be collected.

The granularity for collecting apparatus trajectory data comprises at least one of the following: a radio resource control state; or a plurality of radio resource control states.

The configuration information may comprise a trigger for collecting apparatus trajectory data.

The trigger for collecting apparatus trajectory data may be cell specific, beam specific or location specific.

The trigger for collecting apparatus trajectory data may comprise at least one of the following: being in a cell with a cell identifier, in a beam with a beam identifier or in location with a location identifier; or being in a cell with an energy saving mode or in a beam with an energy saving mode.

The trigger for collecting apparatus trajectory data may be event specific.

The trigger for collecting apparatus trajectory data may comprise at least one of the following: experiencing a radio link failure event; experiencing an early handover event; or experiencing a late handover event.

The at least one memory may store instructions that, when executed by the at least one processor, cause the apparatus at least to: send, to the network node, an indication that apparatus trajectory data is available for reporting.

The configuration information may further be for reporting apparatus trajectory data.

The configuration information may comprise a trigger for sending the indication that apparatus trajectory data is available for reporting.

The trigger for sending the indication that apparatus trajectory data is available for reporting may comprise a number of apparatus trajectory data logs within a report reaching a report size threshold.

The at least one memory may store instructions that, when executed by the at least one processor, cause the apparatus at least to: receive, from the network node, a request to retrieve apparatus trajectory data; and report, to the network node, the apparatus trajectory data.

The request may comprise at least one filter to filter the apparatus trajectory data.

The at least one memory may store instructions that, when executed by the at least one processor, cause the apparatus at least to: filter the apparatus trajectory data based on the filter; and report, to the network node, the filtered apparatus trajectory data.

The apparatus may a user equipment.

The network node may be a base station.

The network node may be a base station central unit.

According to an aspect there is provided an apparatus comprising means for: receiving, from a network node, configuration information for collecting apparatus trajectory data; and using the configuration information for collecting apparatus trajectory data.

According to an aspect there is provided an apparatus comprising circuitry configured to: receive, from a network node, configuration information for collecting apparatus trajectory data; and use the configuration information for collecting apparatus trajectory data.

According to an aspect there is provided a method comprising: receiving, from a network node, configuration information for collecting apparatus trajectory data; and using the configuration information for collecting apparatus trajectory data.

The method may be performed by an apparatus.

The configuration information may comprise a granularity for collecting apparatus trajectory data.

The granularity for collecting apparatus trajectory data may comprise at least one of the following: a list of cells where apparatus trajectory data is to be collected; a list of beams where apparatus trajectory data is to be collected; or a list of locations where apparatus trajectory data is to be collected.

The granularity for collecting apparatus trajectory data comprises at least one of the following: a radio resource control state; or a plurality of radio resource control states.

The configuration information may comprise a trigger for collecting apparatus trajectory data.

The trigger for collecting apparatus trajectory data may be cell specific, beam specific or location specific.

The trigger for collecting apparatus trajectory data may comprise at least one of the following: being in a cell with a cell identifier, in a beam with a beam identifier or in location with a location identifier; or being in a cell with an energy saving mode or in a beam with an energy saving mode.

The trigger for collecting apparatus trajectory data may be event specific.

The trigger for collecting apparatus trajectory data may comprise at least one of the following: experiencing a radio link failure event; experiencing an early handover event; or experiencing a late handover event.

The method may comprise: sending, to the network node, an indication that apparatus trajectory data is available for reporting.

The configuration information may further be for reporting apparatus trajectory data.

The configuration information may comprise a trigger for sending the indication that apparatus trajectory data is available for reporting.

The trigger for sending the indication that apparatus trajectory data is available for reporting may comprise a number of apparatus trajectory data logs within a report reaching a report size threshold.

The method may comprise: receiving, from the network node, a request to retrieve apparatus trajectory data; and report, to the network node, the apparatus trajectory data.

The request may comprise at least one filter to filter the apparatus trajectory data.

The method may comprise: filtering the apparatus trajectory data based on the filter; and reporting, to the network node, the filtered apparatus trajectory data.

The apparatus may a user equipment.

The network node may be a base station.

The network node may be a base station central unit.

According to an aspect there is provided a computer program comprising computer executable code which when run on at least one processor is configured to: receive, from a network node, configuration information for collecting apparatus trajectory data; and use the configuration information for collecting apparatus trajectory data.

According to an aspect there is provided an apparatus comprising at least one processor and at least one memory storing instructions that, when executed by the at least one processor, cause the apparatus at least to: send, to a user equipment, configuration information for collecting user equipment trajectory data.

The apparatus may send the configuration information upon determining that at least one apparatus selection criterion being met.

The at least criterion may comprises at least one of: a model requiring user equipment trajectory data from a plurality of cells for training or retraining or for inference and the user equipment camping on a cell amongst the plurality of cells; a model requiring user equipment trajectory data from a cell for training or retraining or for inference and the user equipment camping on the cell; or a model requiring user equipment trajectory data with a granularity finer than the granularity of user equipment trajectory data available at the apparatus for training or retraining or for inference.

The at least one memory may store instructions that, when executed by the at least one processor, cause the apparatus at least to: receive, from an operations administration and maintenance, the configuration information.

The at least one memory may store instructions that, when executed by the at least one processor, cause the apparatus at least to: receive, from the user equipment, user equipment trajectory data; and use the user equipment trajectory data with a model for training or retraining or for inference.

According to an aspect there is provided an apparatus comprising means for: sending, to a user equipment, configuration information for collecting user equipment trajectory data.

According to an aspect there is provided an apparatus comprising circuitry configured to: send, to a user equipment, configuration information for collecting user equipment trajectory data.

According to an aspect there is provided a method comprising: sending, to a user equipment, configuration information for collecting user equipment trajectory data.

The method may be performed by an apparatus.

The apparatus may send the configuration information upon determining that at least one apparatus selection criterion being met.

The at least criterion may comprises at least one of: a model requiring user equipment trajectory data from a plurality of cells for training or retraining or for inference and the user equipment camping on a cell amongst the plurality of cells; a model requiring user equipment trajectory data from a cell for training or retraining or for inference and the user equipment camping on the cell; or a model requiring user equipment trajectory data with a granularity finer than the granularity of user equipment trajectory data available at the apparatus for training or retraining or for inference.

The method may comprise: receiving, from an operations administration and maintenance, the configuration information.

The method may comprise: receiving, from the user equipment, user equipment trajectory data; and use the user equipment trajectory data with a model for training or retraining or for inference.

According to an aspect there is provided a computer program comprising computer executable code which when run on at least one processor is configured to: send, to a user equipment, configuration information for collecting user equipment trajectory data.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AI:: Artificial Intelligence
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HSS:: Home Subscriber Server
- IE:: Information Element
- IoT:: Internet of Things
- LMF:: Location Management Function
- LPP:: Location Positioning Protocol
- LTE:: Long Term Evolution
- MAC:: Medium Access Control
- ML:: Machine Learning
- MS:: Mobile Station
- MTC:: Machine Type Communication
- NEF:: Network Exposure Function
- NF:: Network Function
- NR:: New radio
- NRF:: Network Repository Function
- OAM:: Operations Administration Maintenance
- PDU:: Packet Data Unit
- RAM:: Random Access Memory
- (R)AN:: (Radio) Access Network
- ROM:: Read Only Memory
- RRC:: Radio Resource Control
- SINR:: Signal to Interference plus Noise Ratio
- SMF:: Session Management Function
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Fig. 1 shows a schematic representation of a 5G system;
Fig. 2 shows a schematic representation of a control apparatus;
Fig. 3 shows a schematic representation of a user equipment;
Figure 4 shows a schematic representation of a functional framework for radio access network intelligence as per 3GPP TR 37.817;
Figure 5 shows a schematic representation of user equipment trajectory data in three cases;
Figure 6 shows a signalling diagram of a process for sending configuration information for at least one of collecting or reporting user equipment trajectory data;
Figure 7 shows a signalling diagram of a process for reporting user equipment trajectory data;
Figure 8 shows a flow diagram of a process for using configuration information for at least one of collecting or reporting user equipment trajectory data;
Figure 9 shows a signalling diagram of a process for reporting filtered user equipment trajectory data;
Figure 10 shows a signalling diagram of a process for sending configuration information for at least one of collecting or reporting user equipment trajectory data;
Figure 11 shows a signalling diagram of a process for sending an indication that user equipment trajectory data is available for reporting;
Figure 12 shows a flow diagram for reporting user equipment trajectory data;
Figure 13 shows a block diagram of a method for using configuration for at least one of collecting or reporting apparatus trajectory data performed by an apparatus such as a user equipment;
Figure 14 shows a block diagram of a method for sending configuration for at least one of collecting or reporting apparatus trajectory data performed by an apparatus such as a base station; and
Fig. 15 shows a schematic representation of a non-volatile memory medium storing instructions which when executed by a processor allow a processor to perform one or more of the steps of the methods of Fig. 13 and Fig. 14.

### Detailed Description of the Figures

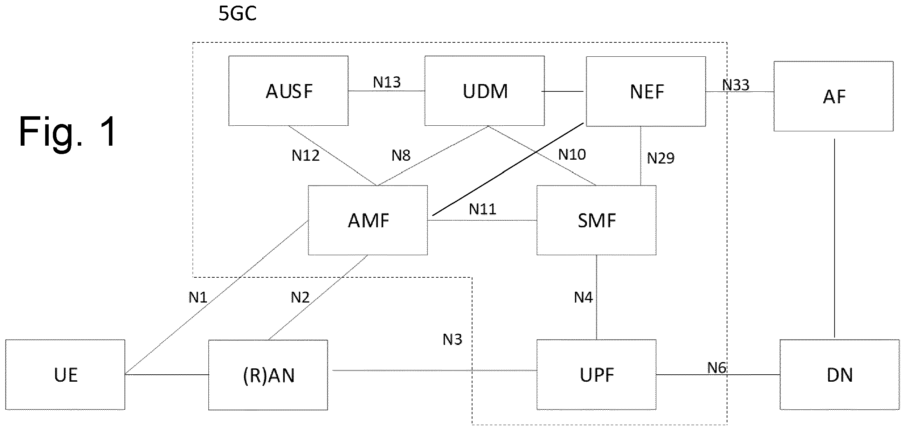

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Fig. 1, Fig.2 and Fig.3 to assist in understanding the technology underlying the described examples.

FIG. 1 shows a schematic representation of a 5G system (5GS). The 5GS may comprise a user equipment (UE), a (radio) access network ((R)AN), a 5G core network (5GC), one or more application functions (AF) and one or more data networks (DN).

The 5G (R)AN may comprise one or more gNodeB (gNB) distributed unit (DU) functions connected to one or more gNodeB (gNB) centralized unit (CU) functions.

The 5GC may comprise an access and mobility management function (AMF), a session management function (SMF), an authentication server function (AUSF), a user data management (UDM), a user plane function (UPF) and/or a network exposure function (NEF).

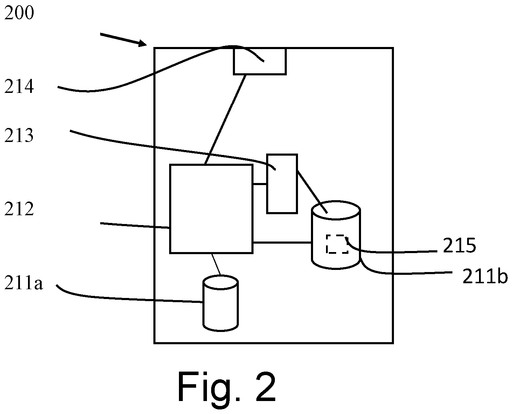

Fig. 2 illustrates an example of a control apparatus 200 for controlling a function of the (R)AN or the 5GC as illustrated on Fig. 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

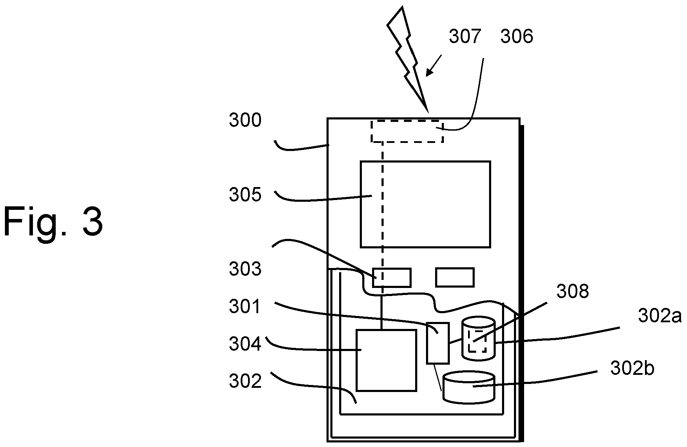

Fig. 3 illustrates an example of a UE 300, such as the UE illustrated on Fig. 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Fig. 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

To meet 5G network requirements in terms of performance and demand from a rapid growth of mobile subscribers, millions of BSs may be deployed. This may bring the issue of optimizing the network. Techniques using artificial intelligence (AI) or machine learning (ML) may be utilized to automate this work. 3GPP TR 37.817 identified use cases for AI or ML enabled RAN: network energy saving, load balancing, and mobility optimization.

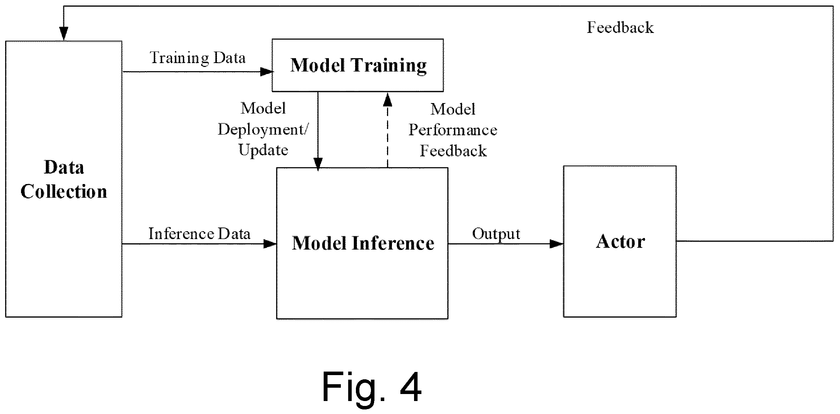

Figure 4 shows a schematic representation of a functional framework for radio access network intelligence as per 3GPP TR 37.817. The functional framework comprises a data collection function, a model training function, a model inference function and an actor function.

The data collection function may be configured to collect and report training data to the model training function. The data collection function may be configured to collect and report inference data to the model inference function.

The model training function may be configured to train an AI or ML model. The model training function may be configured to validate the AI or ML model. el. The model training function may be configured to test the AI or ML model. Testing the AI or ML model may comprise generating performance metrics.

The model training function may be configured to pre-process, clean, format or transform the training data collected and reported by the data collection function, if required.

The model training function may be configured to deploy the AI or ML model to the model inference function. The model training function may be configured to deploy an updated AI or ML model to the model inference function.

The model inference function may be configured to use inference data with the AI or ML model to provide an output. The output may comprise predictions or decisions.

The model inference function may be configured to send model performance feedback to the model training function, if required. The model performance feedback may be used by the model training function to generate the performance metrics.

The model inference function may be configured to pre-process, clean, format or transform the inference data collected and reported by the data collection function, if required.

The actor function may be configured to receive the output provided by the model inference function. The actor function may be configured to trigger actions based on the output provided by the model inference function. The actions may be performed by the actor function or another function.

The actor function may be configured to send feedback to the data collection function. The feedback may comprise information used by the data collection function to collect and report the training data or the inference data. The feedback may comprise information used by the data collection function to monitor the performance of the AI or ML Model and its impact to the network. The feedback may comprise information used by the data collection function to update key performance indicator or performance counters.

Various options are possible to locate the model training function and the model inference function. According to an option, the model training function may be located in an operations, administration and maintenance (OAM) and the model inference function may be located in a base station. According to another option, both the model training function and the model inference function may be located in a base station.

One or more aspect of this disclosure relate to trajectory data collection in the (R)AN.

In this disclosure the expression "trajectory data" or "mobility history data" may be interchanged.

Trajectory data collection in the (R)AN may be UE-based or network-based. In existing UE-based UE trajectory data collection solutions, the UE trajectory data comprises data related to the visited cells and time spent on the visited cells.

A shortcoming of existing UE-based UE trajectory data collection solutions is that the UE trajectory data does not comprise data related to the visited beams and time spent on the visited beam.

Another shortcoming of existing UE-based UE trajectory data collection solutions is that the UE does not receive configuration information from the network to implement the UE-based UE trajectory data collection solutions.

Another shortcoming of existing UE-based UE trajectory data collection solutions is that all UEs supporting the existing UE-based UE trajectory data collection solutions collect UE trajectory data. This may have a negative impact on the UE side due to the possibly unnecessary data collection and reporting to the network. This may also have a negative impact on the network side due to the possibly unnecessary data storage at the network.

One or more aspect of this disclosure provides an UE-based UE trajectory data collection solution without one or more of the above shortcoming.

One or more aspect of this disclosure provides an UE-based UE trajectory data collection solution wherein a UE may be configured to receive, from a BS, configuration information for at least one of collecting or reporting UE trajectory data. The BS may be a gNB, in particular a gNB-CU in case of split architecture. The UE may be configured to use the configuration information for at least one of collecting or reporting UE trajectory data.

The configuration information may allow the UE to customize the UE trajectory data collection or reporting.

The configuration information may be sent in an RRC message.

The configuration information may comprise a granularity for collecting UE trajectory data. The granularity for collecting UE trajectory data may comprise at least one of a cell level, a beam level; or a specific location level (i.e. detailed location level in terms of a latitude or longitude or an area around a latitude or longitude). Additionally, or alternatively, the granularity for collecting apparatus trajectory data may comprise at least one of a radio resource control (RRC) state or a plurality of RRC states.

The configuration information may comprise a trigger for collecting UE trajectory data.

The trigger for collecting UE trajectory data may be cell specific. The trigger for collecting UE trajectory data may comprise the UE being in a specific cell with a specific cell identifier. The trigger for collecting UE trajectory data may comprise the UE being in a cell with a specific energy saving mode (e.g. discontinuous reception or discontinuous transmission mode).

The trigger for collecting UE trajectory data may be beam specific. The trigger for collecting UE trajectory data may comprise the UE being in a specific beam with a specific beam identifier. The trigger for collecting UE trajectory data may comprise the UE being in a beam with a specific energy saving mode (e.g. discontinuous reception or discontinuous transmission mode).

The trigger for collecting UE trajectory data may be event specific.

The trigger for collecting UE trajectory data may comprise the UE experiencing a radio link failure event. For example, if the UE experiences a radio link failure event the UE may collect cell level and beam UE trajectory data.

The trigger for collecting UE trajectory data may comprise the UE experiencing an early handover event. For example, if a time of handover precedes an expected time of handover by an amount of time greater than a threshold the UE may collect both cell level and beam UE trajectory data. The UE may also have a default configuration to only collect cell level UE trajectory data.

The trigger for collecting UE trajectory data may comprise the UE experiencing a late handover event. For example, if a time of handover exceeds an expected time of handover by an amount of time greater than a threshold the UE may receive configuration information to collect both cell level and beam UE trajectory data.

The UE may be configured to store the UE trajectory data collected by the UE in a report.

The configuration information may comprise a trigger for sending, to the BS, an indication that UE trajectory data is available for reporting to the BS.

The trigger for sending, to the BS, the indication that UE trajectory data is available for reporting to the BS may comprise a number of UE trajectory data logs within the report reaching a report size threshold to indicate iterative reporting.

The configuration information may indicate the report size threshold. The report size threshold may be set smaller than or equal to a maximum number of UE trajectory data logs within the report (e.g. 16).

The trigger for sending, to the BS, the indication that UE trajectory data is available for reporting to the BS may comprise the report being full.

The trigger for sending, to the BS, the indication that UE trajectory data is available for reporting to the BS may comprise the report being partially full (e.g. half full).

The trigger for sending, to the BS, the indication that UE trajectory data is available for reporting to the BS may comprise a UE trajectory data log being added to the report. That is, the indication that UE trajectory data is available may be reported every time UE trajectory data is logged by the UE. Such trigger may be seen as an event-based trigger "new cell visited", "new beam visited" or "new specific location visited (i.e. new detailed location visited)". Such trigger allows the BS to retrieve UE trajectory data from the UE as soon as possible and avoid loss of UE trajectory data collected by the UE.

It will be understood that the configuration information does not necessarily comprise a granularity for collecting UE trajectory data, a trigger for collecting UE trajectory data and a trigger for sending, to the BS, an indication that UE trajectory data is available for reporting to the BS. The configuration information may comprise at least one of a granularity for collecting UE trajectory data, a trigger for collecting UE trajectory data and a trigger for sending, to the BS, an indication that UE trajectory data is available for reporting to the BS.

The BS may receive, from an OAM, some or all of the configuration information. For example, the BS may receive, from the OAM, the granularity for collecting UE trajectory data. The granularity for collecting UE trajectory data may comprise at least one of a cell level, a beam UE level; or a specific location level (i.e. detailed location level).

The BS may send, to the UE, the configuration information upon determining that at least one UE selection criterion is met.

The at least criterion may comprise a model deployed at the BS requiring UE trajectory data from a plurality of cells for training or retraining or for inference and the UE camping on a cell amongst the plurality of cells. In this way, any UE camping on any cell amongst the plurality of cells may receive the configuration information. The plurality of cells may comprise cells served by the BS. The plurality of cells may comprise all cells served by the BS.

The at least criterion may comprise a model deployed at the BS a model deployed at the BS requiring UE trajectory data from a specific cell for training or retraining or for inference and the UE camping on the specific cell. In this way, any UE camping on the specific cell may receive the configuration information. The specific cell may comprise a cell served by the BS.

The at least criterion may comprise a model deployed at the BS a model deployed at the BS requiring UE trajectory data from a specific cell for training or retraining or for inference, the UE camping on the cell and the UE requesting a specific service or a service with a specific quality of service (e.g. specific 5G quality of service identifier). In this way, any UE camping on the specific cell and requesting a specific service or a service with a specific quality of service may receive the configuration information. The specific cell may comprise a cell served by the BS.

The at least criterion may comprise a model deployed at the BS a model deployed at the BS requiring UE trajectory data from a specific cell for training or retraining or for inference and the UE camping on the cell. In this way, any UE camping the specific cell may receive the configuration information. The specific cell may comprise a cell served by the BS.

The at least criterion may comprise a model deployed at the BS a model deployed at the BS requiring UE trajectory data with a granularity finer than the granularity of UE trajectory data available at the BS for training or retraining or for inference (e.g. the accuracy of the model is insufficient and the model needs to be retrained).

The UE may be configured to collect UE trajectory data when the UE is in RRC idle state, RRC inactive state or RRC connected state.

The UE may be configured to send, to the BS, the indication that UE trajectory data is available for reporting to the BS when the UE is in RRC connected state.

The UE may be configured to receive, from the BS, a request to retrieve UE trajectory data. The UE may be configured to report, to the BS, the UE trajectory data.

The UE may be configured to receive, from the BS, a request to retrieve UE trajectory data, wherein the request comprises a filter. The UE may be configured to filter the UE trajectory data based on the filter. The UE may be configured to report, to the BS, the filtered UE trajectory data.

The UE may be configured to report, to the BS, the UE trajectory data or the filtered UE trajectory data in a UE trajectory data report. The UE trajectory data report may replace an existing UE trajectory data report specified in standard or may supplement an existing UE trajectory data report specified in standard. The existing UE trajectory data report specified in standard may refer to the "UE mobility history information" specified in 3GPP TS 38.331.

The UE trajectory data report may comprise a maximum number of UE trajectory data logs (e.g. 16)when the UE is in RRC idle state, RRC inactive state or RRC connected state. The UE trajectory data logs may comprise cell level UE trajectory data logs, beam level UE trajectory data logs or specific location level UE trajectory data logs.

The UE may be configured to report, to the BS, additional information in the UE trajectory data report. For example, when a UE camps on cell-1 selects cell-2 instead of cell-3 because cell-3 is switched off by the BS (e.g. for energy saving purpose), the UE may report this information. When a UE camps on beam-1 selects beam-2 instead of beam-3 because beam-3 is switched off by the BS (e.g. for energy saving purpose), the UE may report this information.

The BS may use the UE trajectory data with a model deployed at the BS for training or retraining or for inference.

A model deployed at the BS may be an AI/ML model. A model deployed at the BS may be configured to infer (e.g. to predict or estimate) a UE trajectory based on UE trajectory data. The BS may use the predicted UE trajectory to switch off cells or beams.

In a first example, a model deployed at the BS may be configured to predict a cell level UE trajectory when the UE is in RRC connected state. The model deployed at the BS may use cell level UE trajectory data comprising visited cells and time spent per visited cell when the UE is in RRC connected state.

In a second example, a model deployed at the BS may be configured to predict a beam level UE trajectory when the UE is in RRC connected state. The model deployed at the BS may use beam level UE trajectory data comprising visited beams and time spent per visited beam when the UE is in RRC connected state.

In a third example, a model deployed at the BS may be configured to predict a cell level UE trajectory when the UE is in RRC connected state, RRC idle state or RRC inactive state. The model deployed at the BS may use cell level UE trajectory data comprising visited cells and time spent per visited cell when the UE is in RRC connected state, RRC idle state or RRC inactive state.

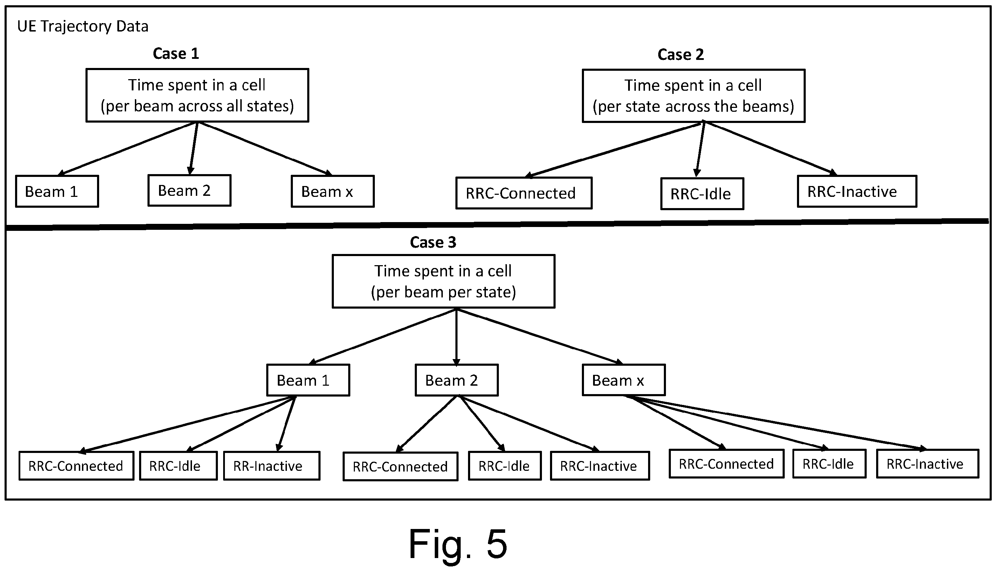

Figure 5 shows a schematic representation of UE trajectory data in three cases.

In a first case, UE trajectory data may comprise beam level UE trajectory data. UE trajectory data may comprise visited beams and time spent per visited beam.

In a second case, UE trajectory data comprises RRC state level UE trajectory data. UE trajectory data may comprise time spent per RRC state.

In a third case, UE trajectory data may comprise beam level and RRC state level UE trajectory data. UE trajectory data may comprise visited beams and time spent per visited beam per RRC state.

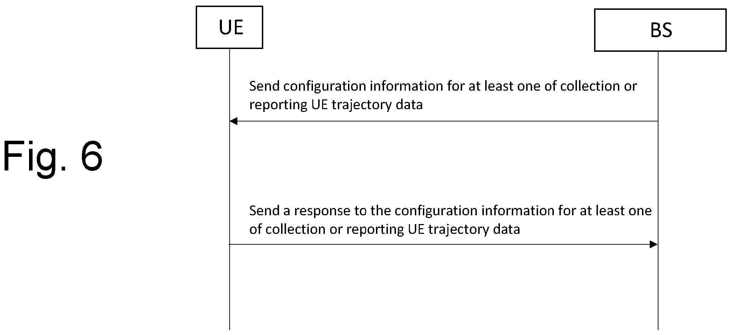

Figure 6 shows a signalling diagram of a process for sending configuration information for at least one of collecting or reporting UE trajectory data.

A BS may send, to a UE, configuration information for at least one of collection or reporting UE trajectory data. Here, the configuration information may comprise a granularity for collecting UE trajectory data. The granularity for collecting UE trajectory data may comprise at least one of a cell level, a beam level; or a specific location level (i.e. detailed location level). The configuration information may comprise a trigger for collecting UE trajectory data. The trigger for collecting UE trajectory data may comprise the UE being in a cell with a specific energy saving mode (e.g. discontinuous reception or discontinuous transmission mode).

The UE may send, to the base station, a response to the configuration information for at least one of collection or reporting UE trajectory data. The response to the configuration information for at least one of collection or reporting UE trajectory data may comprise an acknowledgement.

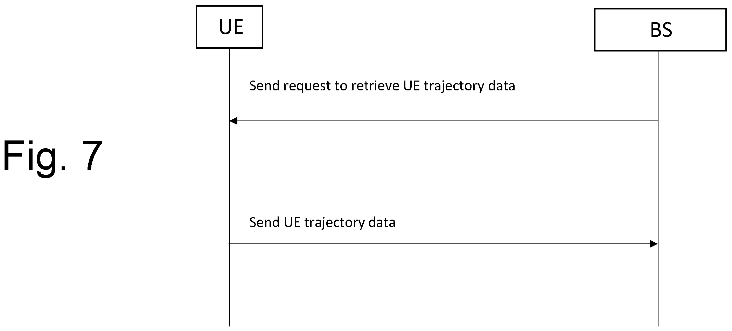

Figure 7 shows a signalling diagram of a process for reporting UE trajectory data.

A BS may send, to UE, a request to retrieve UE trajectory data.

The UE may send, to the BS, a response to the request to retrieve UE trajectory data. The response to the request to retrieve UE trajectory data may comprise UE trajectory data.

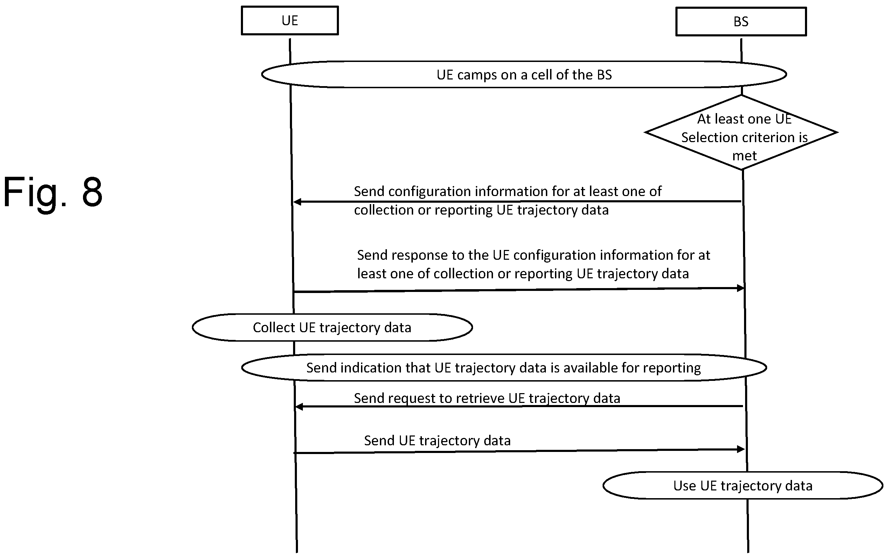

Figure 8 shows a flow diagram of a process for using configuration information for at least one of collecting or reporting UE trajectory data.

A UE may camp on a cell of a BS.

The BS may determine that at least one UE selection criterion is met.

The BS may send, to the UE, configuration information for at least one of collection or reporting UE trajectory data. Here, the configuration information may comprise a granularity for collecting UE trajectory data. The granularity for collecting UE trajectory data may comprise at least one of a cell level, a beam level; or a specific location level (i.e. detailed location level). The configuration information may comprise a trigger for collecting UE trajectory data. The trigger for collecting UE trajectory data may comprise the UE being in a cell with a specific energy saving mode (e.g. discontinuous reception or discontinuous transmission mode).

The UE may send, to the base station, a response to the configuration information for at least one of collection or reporting UE trajectory data. The response to the configuration information for at least one of collection or reporting UE trajectory data may comprise an acknowledgement.

The UE may collect UE trajectory data. The UE may store UE trajectory data logs within a report.

The UE may send, to the BS, an indication that UE trajectory data is available for reporting.

The BS may send, to UE, a request to retrieve UE trajectory data. The request to retrieve UE trajectory data may comprise a filter. Here, the filter may comprise a cell list to retrieve cell level UE trajectory data

The UE may filter the UE trajectory data logs within the report. The UE may send, to the BS, a response to the request to retrieve UE trajectory data. The response to the request to retrieve UE trajectory data may comprise the report with the filtered UE trajectory data logs (i.e. cell level UE trajectory data logs).

The BS may use the filtered UE trajectory data logs with a model deployed at the BS for training or retraining or for inference. The BS may use the filtered UE trajectory data logs with a model deployed at the BS for training or retraining or for inference centrally in a BS-CU (e.g. gNB-CU) or locally in a BS-DU (e.g. gNB-DU).

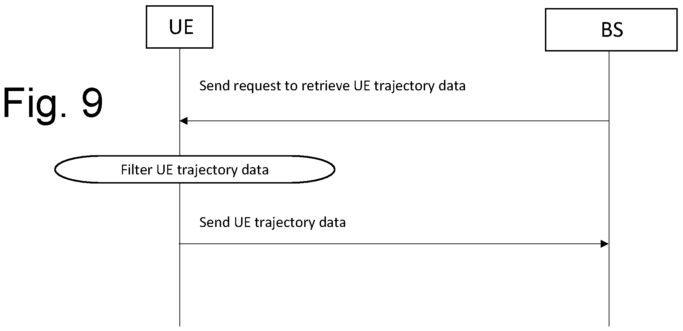

Figure 9 shows a signalling diagram of a process for reporting filtered UE trajectory data.

The BS may send, to UE, a request to retrieve UE trajectory data. The request to retrieve UE trajectory data may comprise a filter. Here, the filter may comprise a beam list to retrieve beam level UE trajectory data.

The UE may filter UE trajectory data logs within a report. The UE may send, to the BS, a response to the request to retrieve UE trajectory data. The response to the request to retrieve UE trajectory data may comprise the report with the filtered UE trajectory data logs (i.e. filtered according only to beam level UE trajectory data).

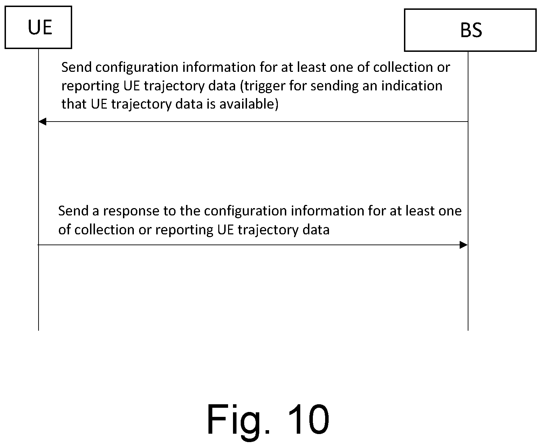

Figure 10 shows a signalling diagram of a process for sending configuration information for at least one of collecting or reporting UE trajectory data.

A BS may send, to a UE, configuration information for at least one of collection or reporting UE trajectory data. Here, the configuration information may comprise a granularity for collecting UE trajectory data. The granularity for collecting UE trajectory data may comprise at least one of a cell level, a beam level; or a specific location level (i.e. detailed location level). The configuration information may comprise a trigger for collecting UE trajectory data. The trigger for collecting UE trajectory data may comprise the UE being in a cell with a specific energy saving mode (e.g. discontinuous reception or discontinuous transmission mode). The configuration information may comprise a trigger for sending, to the BS, an indication that UE trajectory data is available for reporting to the BS. Here, the trigger for sending, to the BS, an indication that UE trajectory data is available for reporting to the BS comprises a number of UE trajectory data logs within a report reaching a report size threshold.

The UE may send, to the base station, a response to the configuration information for at least one of collection or reporting UE trajectory data. The response to the configuration information for at least one of collection or reporting UE trajectory data may comprise an acknowledgement.

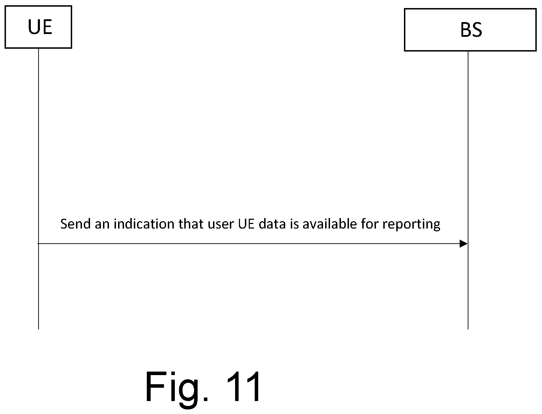

Figure 11 shows a signalling diagram of a process for sending an indication that user UE data is available for reporting.

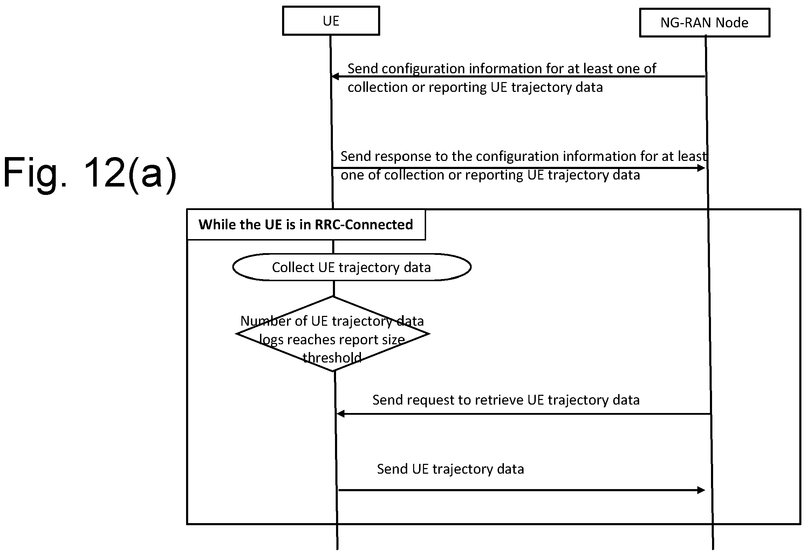

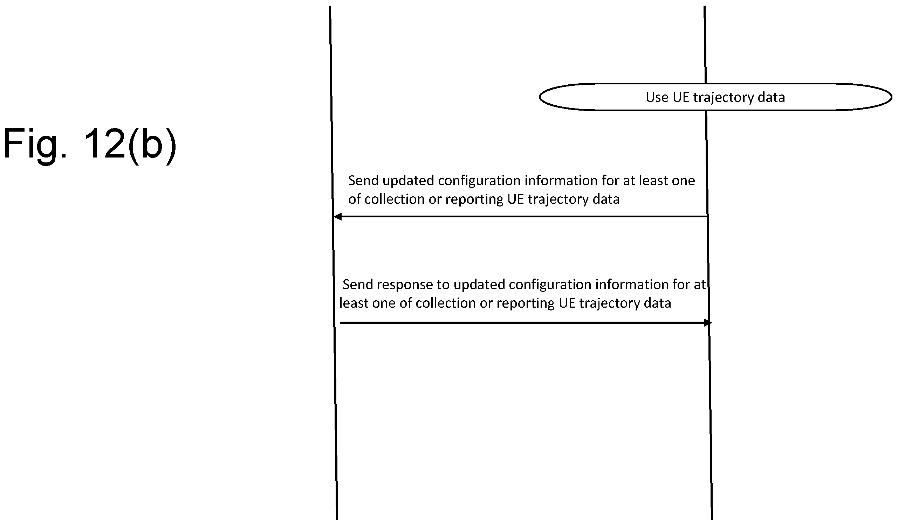

Figure 12 shows a flow diagram for reporting UE trajectory data.

A BS may send, to the UE, configuration information for at least one of collection or reporting UE trajectory data. Here, the configuration information may comprise a granularity for collecting UE trajectory data. The granularity for collecting UE trajectory data may comprise at least one of a cell level, a beam level; or a specific location level (i.e. detailed location level). The configuration information may comprise a trigger for collecting UE trajectory data. The trigger for collecting UE trajectory data may comprise the UE being in a cell with a specific energy saving mode (e.g. discontinuous reception or discontinuous transmission mode). The configuration information may comprise a trigger for sending, to the BS, an indication that UE trajectory data is available for reporting to the BS. Here, the trigger for sending, to the BS, an indication that UE trajectory data is available for reporting to the BS comprises a number of UE trajectory data logs within a report reaching a report size threshold.

The configuration information may comprise the report size threshold set to `N. to perform iterative reporting. 'N' may be comprised between '1' and a maximum number of UE trajectory data logs within a report (e.g. 16) to perform iterative reporting.

The UE may send, to the base station, a response to the configuration information for at least one of collection or reporting UE trajectory data. The response to the configuration information for at least one of collection or reporting UE trajectory data may comprise an acknowledgement.

While the UE is in RRC connected state, the UE may collect UE trajectory data.

The UE may store UE trajectory data logs in a report.

When the number of UE trajectory data logs in the report reach the report size threshold, the UE may send, to the BS, an indication that UE trajectory data is available for reporting.

The BS may send, to UE, a request to retrieve UE trajectory data.

The UE may send, to the BS, a response to the request to retrieve UE trajectory data. The response to the request to retrieve UE trajectory data may comprise the report including the UE trajectory data logs.

The BS may use the trajectory data with a model deployed at the BS for training or retraining or for inference.

After some time, the BS may determine that at least one condition or event is met at the BS (e.g. BS being overloaded)

The BS may send, to the UE, updated configuration information for at least one of collection or reporting UE trajectory data. Here, the update configuration information may comprise a granularity for collecting UE trajectory data. The granularity for collecting UE trajectory data may comprise at least one of a cell level, a beam level; or a specific location level (i.e. detailed location level). The updated configuration information may comprise a trigger for collecting UE trajectory data. The trigger for collecting UE trajectory data may comprise the UE being in a cell with a specific energy saving mode (e.g. discontinuous reception or discontinuous transmission mode). The updated configuration information may comprise a trigger for sending, to the BS, an indication that UE trajectory data is available for reporting to the BS. Here, the trigger for sending, to the BS, an indication that UE trajectory data is available for reporting to the BS no longer comprise a number of UE trajectory data logs within a report reaching a report size threshold.

The configuration information may comprise a report size threshold set to `0'to perform legacy reporting in RRC-Connected transitions or RRC Reconfiguration acknowledgement.

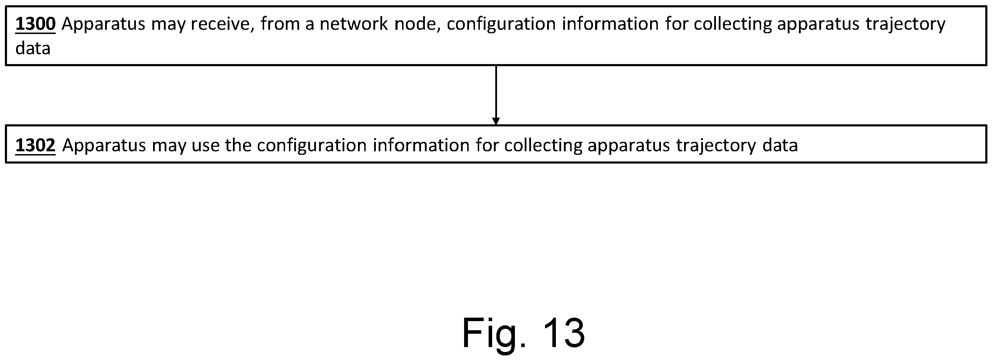

Figure 13 shows a block diagram of a method for using configuration for at least one of collecting or reporting apparatus trajectory data performed by an apparatus such as a UE.

In step 1300, the apparatus may receive, from a network node, configuration information for collecting apparatus trajectory data.

In step 1302, the apparatus may use the configuration information for collecting apparatus trajectory data.

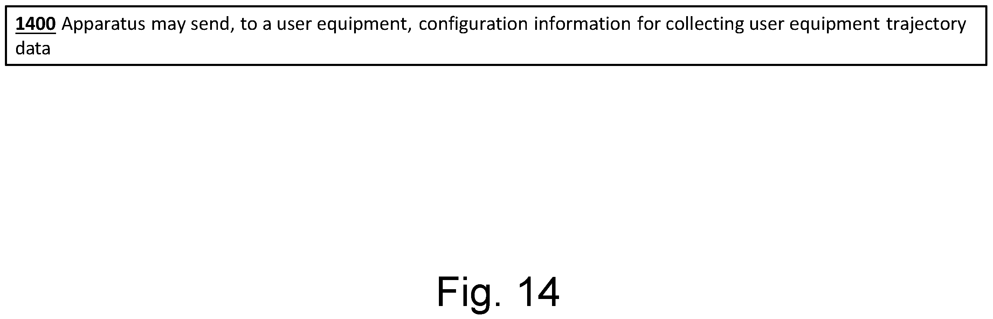

Figure 14 shows a block diagram of a method for sending configuration for at least one of collecting or reporting apparatus trajectory data performed by an apparatus such as a BS.

In step 1400, the apparatus may send, to a UE, configuration information for collecting UE trajectory data.

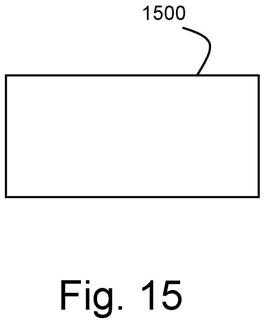

Fig. 15 shows a schematic representation of non-volatile memory media 1500 storing instructions which when executed by a processor allow the processor to perform one or more of the steps of the methods of Fig. 13 and Fig. 14.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Fig. 13 and Fig. 14, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising means for:
receiving, from a network node, configuration information for collecting apparatus trajectory data; and
using the configuration information for collecting apparatus trajectory data.

2. The apparatus of claim 1, wherein the configuration information comprises a granularity for collecting apparatus trajectory data.

3. The apparatus of claim 2, wherein the granularity for collecting apparatus trajectory data comprises at least one of the following:
a list of cells where apparatus trajectory data is to be collected;
a list of beams where apparatus trajectory data is to be collected; or
a list of locations where apparatus trajectory data is to be collected.

4. The apparatus of claim 2 or claim 3, wherein the granularity for collecting apparatus trajectory data comprises at least one of the following:
a radio resource control state; or
a plurality of radio resource control states.

5. The apparatus of any of claims 1 to 4, wherein the configuration information comprises a trigger for collecting apparatus trajectory data, wherein the trigger for collecting apparatus trajectory data is cell specific, beam specific or location specific.

6. The apparatus of claim 5, wherein the trigger for collecting apparatus trajectory data comprises at least one of the following:
being in a cell with a cell identifier, in a beam with a beam identifier or in location with a location identifier; or
being in a cell with an energy saving mode or in a beam with an energy saving mode.

7. The apparatus of claim 5 or claim 6, wherein the trigger for collecting apparatus trajectory data is event specific, wherein the trigger for collecting apparatus trajectory data comprises at least one of the following:
experiencing a radio link failure event;
experiencing an early handover event; or
experiencing a late handover event.

8. The apparatus of any of claims 1 to 7, wherein the at least one processor and at least one memory storing instructions that, when executed by the at least one processor, cause the apparatus at least to:
sending, to the network node, an indication that apparatus trajectory data is available for reporting.

9. The apparatus of claim 8, wherein the configuration information is further for reporting apparatus trajectory data.

10. The apparatus of claim 8 or claim 9, wherein the configuration information comprises a trigger for sending the indication that apparatus trajectory data is available for reporting.

11. The apparatus of claim 9, wherein the trigger for sending the indication that apparatus trajectory data is available for reporting comprises a number of apparatus trajectory data logs within a report reaching a report size threshold.

12. The apparatus of any of claims 1 to 11, comprising means for:
receiving, from the network node, a request to retrieve apparatus trajectory data; and
reporting, to the network node, the apparatus trajectory data.

13. The apparatus of claim 12, wherein the request comprises at least one filter to filter the apparatus trajectory data, the apparatus further comprising means for:
filtering the apparatus trajectory data based on the filter; and
reporting, to the network node, the filtered apparatus trajectory data.

14. An apparatus comprising means for:
sending, to a user equipment, configuration information for collecting user equipment trajectory data, wherein the apparatus sends the configuration information upon determining that at least one apparatus selection criterion being met.

15. A method comprising:
receiving, from a network node, configuration information for collecting apparatus trajectory data; and
using the configuration information for collecting apparatus trajectory data.
